# EUROPÄISCHE PATENTSCHRIFT

(11) **EP 2 524 858 B1**
(45) Veröffentlichungstag und Bekanntmachung des Hinweises auf die Patenterteilung: **22.10.2014**
(21) Anmeldenummer: 11166980.0
(22) Anmeldetag: 20.05.2011
(51) Int. Cl.: B62D 33/04, B62D 63/02

(54) **Einzelmodul für die Bildung eines Kofferaufbaus eines Nutzfahrzeugs**
Individual module for a box body of a commercial vehicle
Module individuel pour la formation d'un ensemble de coffre d'un véhicule utilitaire

(43) Veröffentlichungstag der Anmeldung: 21.11.2012
(73) Patentinhaber: Schmitz Cargobull AG, 48341 Altenberge (DE)
(72) Erfinder: Schlumm, Michael, 48493, Wettringen (DE); Dorr, Christoph, 46514, Schermbeck (DE)
(74) Vertreter: Cohausz & Florack

(56) Entgegenhaltungen:
- DE-A1- 1 914 997
- DE-A1- 3 808 750
- US-A- 3 992 834
- US-A- 4 099 887

## Beschreibung

Die Erfindung betrifft ein Einzelmodul für die Bildung eines Kofferaufbaus eines Nutzfahrzeugs, insbesondere Transporters, Lastkraftwagens, Anhängers und/oder Aufliegers, mit weiteren Einzelmodulen, wobei an einer Innenseite eine innere Decklage, an einer Außenseite eine äußere Decklage und dazwischen eine Kernlage vorgesehen sind. Ferner betrifft die Erfindung einen Kofferaufbau eines Nutzfahrzeugs mit wenigstens drei dieser Einzelmodule.

Die aus dem Stand der Technik bekannten Kofferaufbauten werden insbesondere für den Transport gekühlter Güter, wie Lebensmittel, oder für Güter eingesetzt, die gegen äußere Einflüsse, wie insbesondere Nässe, geschützt werden sollen. Man spricht daher in diesem Zusammenhang auch von Kühltransporten oder Trockentransporten.

Kofferaufbauten von Nutzfahrzeugen weisen typischerweise zwei Seitenwandpaneele, ein Stirnwandpaneel und ein Dachpaneel auf, die auf einer Bodenstruktur montiert sind. Die Rückseite der Kofferaufbauten ist meist durch Türen oder Rolltore verschlossen. Die Paneele weisen dabei zwei äußere, die Außenhaut bildende Decklagen auf, zwischen denen eine Kernlage vorgesehen ist, die meist aus einem geschäumten Kunststoff besteht. Wegen des mehrschichtigen Aufbaus solcher Paneele werden diese häufig auch als Sandwichpaneele bezeichnet.

Man unterscheidet dabei Kofferaufbauten, bei denen die einzelnen Paneele einteilig oder mehrteilig ausgebildet sind. Kofferaufbauten aus einteiligen Paneelen werden in der Regel vollständig an einem Ort gefertigt und montiert. Wenn der Kofferaufbau aus mehrteiligen Paneelen gefertigt wird, können die einzelnen Teile der Paneele an einem Ort vorgefertigt und anschließend zu dezentralen Montageorten transportiert werden. Erst an diesen dezentralen Montageorten erfolgt der Zusammenbau der Paneele und schließlich des Kofferaufbaus aus den einzelnen vorkonfigurierten Teilen auf dem dafür vorgesehenen Nutzfahrzeug. Man spricht bei den einzelnen Teilen eines Paneels auch von Einzelmodulen, die zu sogenannten Komponenten, den entsprechenden Paneelen, zusammengefügt werden.

Auf diese Weise ist es möglich, aus einer Reihe vorkonfigurierter Einzelmodule ähnlich eines Baukastensystems einzelne Bausätze zusammenzustellen, aus denen dann an dezentralen Montageorten die Kofferaufbauten gefertigt werden. Da lediglich kompakte Bausätze und nicht etwa vollständige Paneele zu den dezentralen Montageorten verschickt werden müssen, hält sich der logistische Aufwand bei diesem Vorgehen in Grenzen.

Einzelmodule zur Montage von Kofferaufbauten sind beispielsweise aus der EP 0 607 575 A1 bekannt. Die Einzelmodule weisen zwei äußere Decklagen und eine Kernlage aus einem geschäumten Kunststoff auf. Die Einzelmodule sind rechteckig ausgebildet und weisen folglich vier umlaufende Schmalseiten auf, an denen die Einzelmodule mit weiteren Bauelementen des Kofferaufbaus verbunden werden. Hierzu sind an einem Paar von einander gegenüberliegenden Schmalseiten ein Nutprofil und ein Federprofil vorgesehen. Diese können mit gleichartigen Nutprofilen und Federprofilen weiterer Einzelmodule durch Ineinanderstecken verbunden werden. Beim bekannten Kofferaufbau werden jeweils so viele Einzelmodule über die Nutprofile und Federprofile miteinander verbunden, bis die Komponente in Form einer Seitenwand, einer Stirnwand oder eines Dachs die gewünschte Länge aufweist.

Die Komponenten werden dann über zusätzliche Kantenprofile mit weiteren Komponenten verbunden. Die Kantenprofile erstrecken sich über die gesamte Höhe des Kofferaufbaus, über dessen gesamte Länge bzw. dessen gesamte Breite. Die Kantenprofile bilden auf diese Weise einen Grundrahmen, der dem Kofferaufbau seine Grundsteifigkeit verleiht. Verbunden werden die Kantenprofile mit den Einzelmodulen des Kofferaufbaus, indem diese in Aufnahmen eingesteckt und dort verklebt werden. Bedarfsweise kann die Stabilität der Verbindung durch zusätzliche Verschraubungen erhöht werden. Bei den Einzelmodulen wird an den Seitenkanten, die mit einem Kantenprofil des Kofferaufbaus verbunden werden, auf ein Nutprofil oder ein Federprofil verzichtet. Die Nutprofile und Federprofile sind lediglich zur Verbindung der Einzelmodule derselben Komponente vorgesehen.

Nachteilig an den aus dem Stand der Technik bekannten Bausätzen zur dezentralen Montage von Kofferaufbauten ist, dass diese von Fahrzeug zu Fahrzeug viele unterschiedliche Einzelteile umfassen. Wenn also viele verschiedene Nutzfahrzeugtypen mit Kofferaufbauten versehen werden sollen, müssen sehr viele unterschiedliche Einzelteile vorkonfiguriert werden, aus denen dann je nach Nutzfahrzeug ein spezieller Bausatz zusammengestellt werden muss. Der Grund dafür sind vorwiegend die von Nutzfahrzeug zu Nutzfahrzeug stark variierenden Abmessungen.

Ein und derselbe Kofferaufbau kann daher meist nur für ein bestimmtes Fahrzeug verwendet werden, während für ein anderes Fahrzeug ein anderer Bausatz aus Einzelteilen zusammengestellt werden muss. Zur Fertigung vieler verschiedener Kofferaufbauten für unterschiedliche Nutzfahrzeuge muss also ein Baukastensystem aus sehr vielen verschiedenen Einzelteilen bereitgehalten werden.

Ein weiterer Nachteil besteht darin, dass die einzelnen Bauteile häufig selbst wieder aus sehr vielen unterschiedlichen Einzelteilen zusammengebaut werden müssen. Folglich ist die beschriebene Baukastenlösung mit hohen fertigungstechnischen und logistischen Kosten verbunden.

Die DE 1 914 997 beschreibt ein Einzelmodul nach dem Oberbegriff des Anspruchs 1.

Daher liegt der vorliegenden Erfindung die Aufgabe zugrunde, Einzelmodule der eingangs genannten und zuvor näher beschriebenen Art derart auszugestalten und weiterzubilden, dass der fertigungstechnische und logistische Aufwand für die dezentrale Montage unterschiedlicher Kofferaufbauten aus Einzelmodulen verringert werden kann.

Diese Aufgabe ist bei einer Einzelkomponente mit den Merkmalen des Anspruchs 1 gelöst.

Bei den Einzelkomponenten sind also an wenigstens drei Schmalseiten Nutprofile und Federprofile vorgesehen. Die einzelnen Nutprofile und Federprofile sind Teil eines Profilrahmens, der umlaufend an allen vier Schmalseiten des Einzelmoduls vorgesehen ist. Dieser umlaufende Profilrahmen führt zu einer Stabilisierung des Einzelmoduls, was zur Folge hat, dass auch die aus den Einzelmodulen zusammengesetzten Komponenten in Form einer Stirnwand, einer Seitenwand und/oder eines Dachs eine höhere Stabilität aufweisen. Dieser Zugewinn an Stabilität führt dazu, dass auf zusätzliche, den Kofferaufbau stabilisierende, Bauteile weitestgehend verzichtet werden kann. Insbesondere kann auf die Verwendung von zusätzlichen Kantenprofilen verzichtet werden. Die Funktion der Kantenprofile hinsichtlich der Verbindung der Einzelmodule über eine Kante des Kofferaufbaus hinweg und hinsichtlich der Stabilisierung der einzelnen Komponenten insgesamt, wird durch die umlaufenden Profilrahmen der Einzelkomponenten übernommen.

Da das Einzelmodul an wenigstens drei der umlaufenden vier Schmalseiten ein Nutprofil und ein Federprofil aufweist, können die Einzelmodule nicht nur untereinander in einer gemeinsamen Ebene zu einer Komponente in Form einer Seitenwand, einer Stirnwand oder eines Dachs verbunden werden. Es können auch Einzelmodule einer Komponente direkt, d.h. unter Vermeidung zusätzlicher Kantenprofile, mit

Einzelmodulen einer angrenzenden Komponente verbunden werden. Dies erfordert eine Verbindung der entsprechenden Einzelmodule über Eck, d.h. unter Ausbildung einer Kante, insbesondere des Kofferaufbaus. Dabei ist es bevorzugt, wenn die miteinander verbundenen Einzelmodule zweier Komponenten senkrecht zueinander ausgerichtet sind, um einen quaderförmigen Kofferaufbau zu erhalten.

Die Nutprofile und Federprofile der Einzelmodule sind korrespondierend zueinander ausgebildet, so dass ein Nutprofil eines Einzelmoduls mit einem Federprofil eines angrenzenden Einzelmoduls verbunden werden kann und umgekehrt. Das Nutprofil oder das Federprofil der dritten Schmalseite sind gleichartig wie das Nutprofil bzw. das Federprofil des übrigen Paars einander gegenüberliegender Schmalseiten ausgebildet. Die Verbindung der dritten Schmalseite eines Einzelmoduls erfolgt dabei analog mit einem korrespondierenden Nutprofil oder Federprofil. Die Verwendung gleichartiger Nutprofile und/oder Federprofile vereinfacht die Vorkonfektionierung der Einzelmodule, da immer die gleichen Nutprofile und Federprofile wenigstens an den ersten drei Schmalseiten der Einzelmodule verwendet werden.

Bedarfsweise kann bei den Einzelmodulen, die zur Bildung einer Seitenwand- oder Stirnwand-Komponente vorgesehen sind, an einer Schmalseite auf ein Nutprofil und ein Federprofil verzichtet werden. Diese Schmalseite ist dann vorzugsweise zur Verbindung mit dem Boden des Kofferaufbaus vorgesehen. Es kann aber dennoch an dieser vierten Schmalseite ein Verbindungsprofil vorgesehen sein, das dann in Form eines Nutprofils oder Federprofils und bedarfsweise gleichartig zu dem Nutprofil oder dem Federprofil des anderen Paars von Schmalseiten ausgebildet sein kann. Dadurch kann die Anzahl verschiedener Bauteile zur Fertigung des Einzelmoduls verringert werden.

Bei einer ersten bevorzugten Ausgestaltung des Einzelmoduls ist vorgesehen, dass die dritte Seitenkante mit einem Einzelmodul einer angrenzenden Komponente verbunden wird. Das bedeutet, dass sich die Einzelmodule mit gleichartigen Nutprofilen und Federprofilen nicht nur in einer gemeinsamen Ebene, sondern auch über Eck miteinander verbinden lassen, wobei die miteinander verbundenen Einzelmodule dann vorzugsweise senkrecht zueinander stehen. Mit anderen Worten sind die Nutprofile und die Federprofile der Einzelmodule so ausgestaltet, dass sie auf zwei unterschiedliche Weisen miteinander verbindbar sind. In einer gegenseitigen Ausrichtung der Nutprofile und Federprofile sind diese in einer gemeinsamen Ebene verbindbar, während die gleichen Nutprofile und Federprofile in einer anderen gegenseitigen Ausrichtung senkrecht zueinander verbindbar sind. Diese beiden Ausrichtungen unterscheiden sich vorzugsweise darin, dass entweder das Nutprofil oder das Federprofil gegenüber dem jeweils anderen Profil um 180° gedreht ist.

Insbesondere bei Einzelmodulen, die zur Bildung eines Dachs vorgesehen sind, bietet es sich an, wenn an den Schmalseiten des zweiten Paares von Schmalseiten jeweils ein Nutprofil oder jeweils ein Federprofil vorgesehen sind. Dabei sind dann die Federprofile bzw. die Nutprofile an beiden Schmalseiten gleichartig zueinander ausgebildet. Die Schmalseiten des zweiten Paars von Schmalseiten können dann den beiden Seitenwandpaneelen zugeordnet werden, wobei jede dieser Schmalseiten in gleicher Weise mit dem entsprechenden Seitenwandpaneel bzw. den das Seitenwandpaneel bildenden Einzelmodulen verbunden wird. Dies erlaubt es auch, die beiden Seitenwandpanelle gleichartig auszubilden. Insbesondere wenn die Seitenwandpaneelkomponenten ihrerseits aus Einzelmodulen zusammengesetzt sind, können an den oberen Rändern beider Seitenwandpaneele gleichartige Federprofile oder gleichartige Nutprofile vorgesehen sein.

Alternativ oder zusätzlich können das wenigstens eine Nutprofil und das wenigstens eine Federprofil des Einzelmoduls derart ausgebildet sein, dass das Einzelmodul mit gleichartigen Einzelmodulen formschlüssig verbunden, insbesondere verriegelt, werden kann. Dabei wird dann das Nutprofil eines Einzelmoduls mit dem Federprofil eines anderen Einzelmoduls verbunden. Der Formschluss wirkt dann in einer Auszugsrichtung senkrecht zum Nutprofil und parallel zum Einzelmodul des Nutprofils. Nach dem Verbinden zweier Einzelmodule können diese nicht mehr ohne Weiteres, insbesondere nicht zerstörungsfrei, dadurch getrennt werden, dass das das Nutprofil aufweisende Einzelmodul in gleicher Ebene senkrecht zur Verbindung bewegt wird. Dies bedeutet vorzugsweise auch, dass die Fügerichtung bezogen auf das das Nutprofil aufweisende Einzelmodul deutlich von einer Richtung parallel zum Einzelmodul und senkrecht zur Verbindung abweicht. Letztlich können durch die entsprechende Verbindung nicht nur hohe Auszugskräfte, sondern vorzugsweise auch drängende, d.h. bezogen auf den Kofferaufbau nach außen gerichtete Kräfte, aufgenommen werden.

Wenn die Nutprofile und die Federprofile des Einzelmoduls so ausgestaltet sind, dass zwei gleichartige Einzelmodule sowohl in gerader Line oder über Eck miteinander verbunden werden können, bildet die Verbindung vorzugsweise in beiden Fällen einen Formschluss, insbesondere eine Verriegelung in einer Richtung senkrecht zur Verbindung und parallel zu dem das Nutprofil aufweisenden Einzelmodul. In dieser Auszugrichtung kann die Verbindung aufgrund des Formschlusses bzw. der Verriegelung nicht mehr, insbesondere nicht zerstörungsfrei, getrennt werden.

Alternativ oder zusätzlich können das wenigstens eine Nutprofil und das wenigstens eine Federprofil des Einzelmoduls so ausgebildet sein, dass das Einzelmodul mit einem weiteren, bezogen auf die Verbindungsprofile gleichartigen Einzelmodul in gerader Linie und/oder über Eck mittels einer Schnappverbindung verbunden werden kann. Dazu kann die Nutverbindung eine Wulst aufweisen, mit der das Federprofil durch Einschnappen in Eingriff gelangt. Auf diese Weise wird eine genaue Positionierung zwischen Nutprofil und Federprofil erreicht, die durch das Einschnappen der Profile erkennbar ist.

Bei einem weiter bevorzugten Einzelmodul sind wenigstens ein Nutprofil mit einem hakenförmigen Abschnitt und wenigstens ein Federprofil mit einer Nut versehen. Die Nut und der hakenförmige Abschnitt sind so aufeinander abgestimmt, dass der hakenförmige Abschnitt des Nutprofils in die Nut des Federprofils eingereift, wenn zwei gleichartige Einzelmodule in gerader Linie miteinander verbunden werden. Durch das Eingreifen des hakenförmigen Abschnitts in die Nut des Federprofils kann ein Formschluss zwischen den verbundenen Einzelmodulen erhalten werden. Beim Verbinden der Einzelmodule in gerader Linie kommt es zudem vorzugsweise zu einem Verriegeln der Einzelmodule gegeneinander, und zwar in einer Auszugsrichtung senkrecht zur Verbindung und parallel zu dem das Nutprofil aufweisenden Einzelmodul.

Dabei kann es besonders bevorzugt sein, wenn die äußere Decklage um den hakenförmigen Abschnitt des wenigstens einen Nutprofils herumgeführt ist, und zwar derart, dass die äußere Decklage zusammen mit dem hakenförmigen Abschnitt in der Nut des Federprofils aufgenommen wird, wenn zwei gleichartig ausgebildete Einzelmodule in gerader Linie miteinander verbunden werden. Auf diese Weise kann eine optisch ansprechende Verbindung geschaffen werden. Außerdem kann eine Dichtung zwischen der äußere Decklage des einen Einzelmoduls und dem angrenzenden Einzelmodul, insbesondere in der Nut des Federprofils, vorgesehen werden.

Um die Fertigungskosten des Einzelmoduls gering zu halten, können alternativ oder zusätzlich das wenigstens eine Federprofil und/oder das wenigstens eine Nutprofil als Rollprofil ausgebildet sein. Andere Herstellungsarten der Profile sind jedoch denkbar, wobei das wenigstens eine Federprofil und/oder das wenigstens eine Nutprofil vorzugsweise als Hohlprofil ausgebildet wird.

Die eingangs genannte Aufgabe ist ferner durch einen Kofferaufbau der eingangs genannten Art gelöst, bei dem die wenigstens drei Einzelmodule nach einem der Ansprüche 1 bis 8 ausgebildet sind, wobei ein erstes Einzelmodul mit einem zweiten Einzelmodul über ein Federprofil und ein Nutprofil der entsprechenden Einzelmodule in parallelen Ebenen, vorzugsweise fluchtend, miteinander verbunden sind und wobei das erste Einzelprofil mit einem dritten Einzelmodul über ein Federprofil und ein Nutprofil der entsprechenden Einzelmodule über Eck, vorzugsweise im rechten Winkel, miteinander verbunden sind.

Bei einem derartigen Kofferaufbau können wenigstens zwei Komponenten aus gleichartigen Einzelmodulen aufgebaut sein. Bei den Komponenten handelt es sich vorzugsweise um ein Seitenwandpaneel und das Stirnwandpaneel.

Dabei bezieht sich der gleichartige Aufbau der Einzelmodule im Wesentlichen darauf, dass die Einzelmodule die gleichen Nutprofile und Federprofile aufweisen. Ansonsten können die Einzelmodule durchaus unterschiedlich ausgebildet sein, und zwar nicht nur hinsichtlich ihrer Abmessungen, sondern auch hinsichtlich der Zahl der gleichartigen Nutprofile und/oder Federprofile. Es ist jedoch grundsätzlich bevorzugt, wenn die Einzelmodule auch über die Nutprofile und die Federprofile hinaus möglichst gleichartig ausgebildet sind, um die fertigungstechnischen und logistischen Kosten gering zu halten.

Bevorzugt sind die Einzelmodule so ausgebildet, dass, wenn sie in einer geraden Linie miteinander verbunden werden, ihre äußeren Decklagen fluchtend angeordnet sind. Unter einer Verbindung in gerader Linie wird eine Verbindung verstanden, in der die verbundenen Einzelmodule parallel zueinander vorzugsweise in derselben Ebene angeordnet sind. Dagegen wird unter einer Verbindung zweier Einzelmodule über Eck eine Verbindung verstanden, bei dem die beiden Einzelmodule im Wesentlichen senkrecht zueinander stehen, insbesondere rechtwinklig zueinander ausgerichtet sind. Es wären zwar auch andere Winkel denkbar, diese sind jedoch für den Aufbau eines quaderförmigen Kofferaufbaus weniger bevorzugt. Eine Verbindung über Eck stellt im Sinne der Erfindung eine Verbindung dar, bei der die beiden verbundenen Einzelmodule gemeinsam eine Kante, insbesondere des Kofferaufbaus, bilden.

Bei einem weiter bevorzugten Kofferaufbau ist vorgesehen, dass das erste Einzelmodul und das zweite Einzelmodul Teil einer Seitenwand, insbesondere eines Seitenwandpaneels, sind, wobei das dritte Einzelmodul Teil einer Stirnwand, insbesondere eines Seitenwandpaneels, ist. Das erste, das zweite und das dritte Einzelmodul weisen vorzugsweise jeweils an dem vertikalen Paar Schmalkanten ein Federprofil und ein Nutprofil auf. Durch die abwechselnde Anordnung von Nutprofilen und Federprofilen an den im montierten Zustand vertikalen Schmalseiten können die einzelnen Komponenten in Form von Seitenwandpaneel und Stirnwandpaneel modular durch eine Mehrzahl von Einzelmodulen aufgebaut werden. Gleichzeitig ist es möglich, ein Seitenwandpaneel mit einem Stirnwandpaneel zu verbinden, weil aufgrund der Anordnung der im verbundenen Zustand vertikal verlaufenden Schmalseiten auch dann ein Federprofil der einen Komponente auf ein Nutprofil der anderen Komponente trifft.

Es kann aber auch vorgesehen sein, dass das erste Einzelmodul und das zweite Einzelmodul Teil einer Seitenwand sind und dass das dritte Einzelmodul Teil eines Dachs ist. Das erste und das zweite Einzelmodul weisen jeweils an dem vertikalen Paar Schmalseiten ein Federprofil und ein Nutprofil sowie jeweils an der oberen horizontalen Schmalseite ein Federprofil auf. In diesem Fall werden die Einzelmodule der Seitenwandpaneele über Federprofile mit Nutprofilen der Einzelmodule des Dachpaneels verbunden. Dies dient nicht nur einem gleichmäßigen Aufbau des Kofferaufbaus, da die Anbindung beider Seitenwandpaneele an das eine Dachpaneel gleichartig erfolgt. Es wird auch eine stabile Verbindung zwischen den Seitenwandpaneelen und dem Dachpaneel geschaffen, weil die Nutprofile des Dachpaneels die Federprofile der Seitenwandpaneele teilweise umgreifen und so beispielsweise drängende Kräfte auffangen können.

Bei einem weiteren bevorzugten Kofferaufbau ist ein viertes Einzelmodul nach einem der Ansprüche 1 bis 9 vorgesehen. Das erste Einzelmodul und das dritte Einzelmodul sind jeweils mit dem vierten Einzelmodul über ein Federprofil und ein Nutprofil der entsprechenden Einzelmodule über Eck, vorzugsweise im rechten Winkel, verbunden. Auf diese Weise wird eine Eckverbindung geschaffen. Die über Eck miteinander verbundenen Einzelmodule bilden im Bereich ihrer Verbindungen Kanten des Kofferaufbaus. Die drei so geschaffenen Kanten stoßen dann in einer Eckverbindung aufeinander, die durch das erste Einzelmodul, das dritte Einzelmodul und das vierte Einzelmodul gebildet wird. Auf diese Weise ist es möglich, den Kofferaufbau insgesamt, d.h. die Seitenwandpaneele, das Stirnwandpaneel und das Dachpaneel, durch gleichartige Einzelmodule der beschriebenen Art aufzubauen. Die Eckverbindung kann dabei eine vordere obere Ecke des Kofferaufbaus bilden.

Auch in diesem Zusammenhang bietet es sich an, wenn das erste Einzelmodul, das zweite Einzelmodul und das dritte Einzelmodul jeweils an den vertikalen Schmalseiten je ein Nutprofil und je ein Federprofil aufweisen.

Das vierte Einzelmodul kann dann für eine möglichst einfache Fertigung des Kofferaufbaus an drei Schmalseiten mit einem Nutprofil und an einer Schmalseite mit einem Federprofil versehen sein. Mit dem Federprofil kann das vierte Einzelmodul dann leicht mit weiteren gleichartigen Einzelmodulen zu einem Dachpaneel zusammengesetzt werden, die dann ihrerseits vorzugsweise an einer Schmalseite ein Federprofil und an den drei anderen Schmalseiten gleichartige Nutprofile aufweisen. Mit den drei Nutprofilen kann das vierte Einzelmodul einfach mit gleichartigen Einzelmodulen an der Stirnwand sowie den Seitenwänden verbunden sein.

Die Erfindung wird nachfolgend anhand einer lediglich Ausführungsbeispiele darstellenden Zeichnung näher erläutert. In der Zeichnung zeigt
- Fig. 1: ein Nutzfahrzeug mit einem ersten Ausführungsbeispiel eines erfindungsgemäßen Kofferaufbau umfassend ein erstes Ausführungsbeispiel erfindungsgemäßer Einzelmodule,
- Fig. 2: ein Einzelmodul der Seitenwand des Kofferaufbaus aus Fig. 1,
- Fig. 3: das Einzelmodul aus Fig. 2 in Seitenansicht aus der Richtung III aus Fig. 2,
- Fig. 4: das Einzelmodul aus Fig. 2 in Seitenansicht aus der Richtung IV aus Fig. 2,
- Fig. 5: eine Verbindung zwischen einem Nutprofil und einem Federprofil zweier Einzelmodule in gerade Linie,
- Fig. 6: eine erste bevorzugte Verbindung zwischen einem Nutprofil und einem Federprofil zweier Einzelmodule über Eck,
- Fig. 7: ein Einzelmodul des Dachs des Kofferaufbaus aus Fig. 1,
- Fig. 8: eine Detaildarstellung des Kofferaufbaus aus Fig. 1,
- Fig. 9A-C: Schnittansichten des Kofferaufbaus aus Fig. 1 entlang der Ebenen A-A bis C-C aus Fig. 6 und
- Fig. 10: eine zweite bevorzugte Verbindung zwischen einem Nutprofil und einem Federprofil zweier Einzelmodule über Eck.

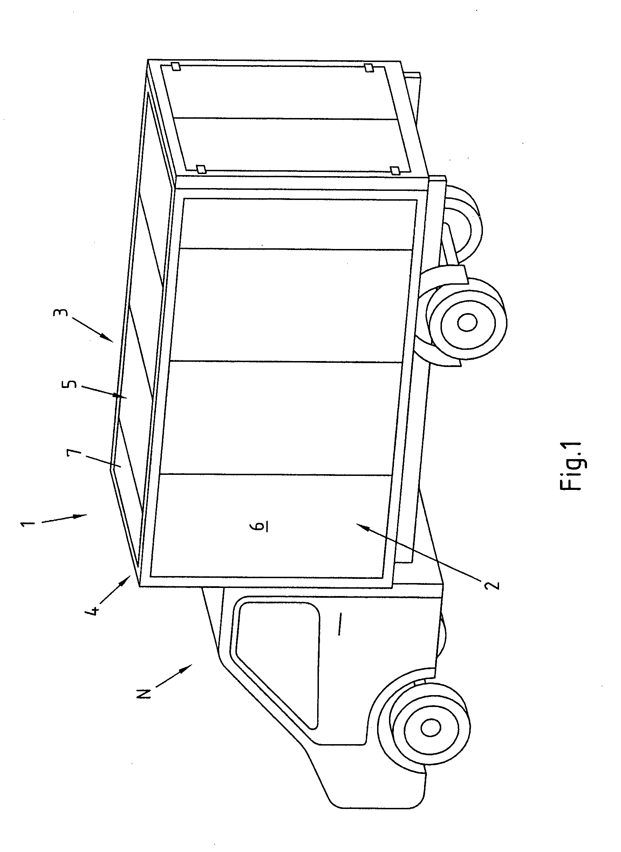

In der Fig. 1 ist ein Nutzfahrzeug N in Form eines Transporters mit einem Kofferaufbau 1 dargestellt, der zwei Seitenwandpaneele 2,3, ein Stirnwandpaneel 4 und ein Dachpaneel 5 umfasst. Jede dieser Komponenten ist aus einer Mehrzahl von Einzelmodulen 6,7 zusammengesetzt.

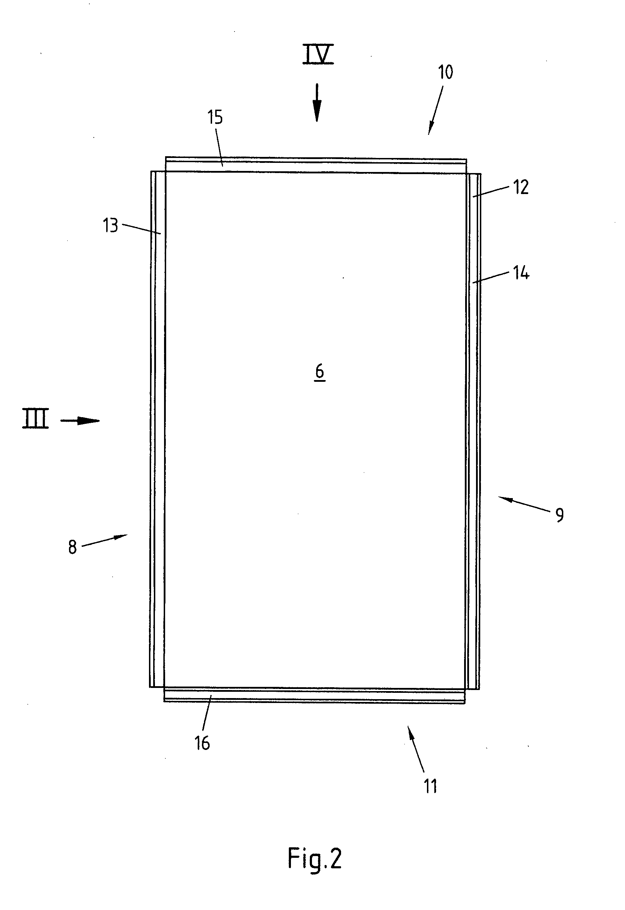

Ein Einzelmodul 6 der Seitenwand 2 ist in der Fig. 2 in Draufsicht dargestellt. Das Einzelmodul 6 weist ein erstes Paar längere Schmalseiten 8,9 und ein zweites Paar kürzere Schmalseiten 10,11 auf. Beim dargestellten und insoweit bevorzugten Einzelmodul 6 ist das erste Paar Schmalseiten 8,9 im verbauten Zustand vertikal und das zweite Paar Schmalseiten 10,11 im verbauten Zustand horizontal ausgerichtet. An jeder der vier Schmalseiten 8,9,10,11 ist ein Verbindungsprofil vorgesehen, so dass die Verbindungsprofile zusammen einen umlaufenden Profilrahmen 12 bilden. Am ersten Paar Schmalseiten 8,9 sind einander gegenüber ein Federprofil 13 und ein Nutprofil 14 vorgesehen. Auch beim zweiten Paar Schmalseiten 10,11 sind einander gegenüber ein Federprofil 13 und ein Nutprofil 14 angeordnet. Die im verbauten Zustand obere Schmalseite 10 des zweiten Paars Schmalseiten 10,11 weist dabei das Federprofil 15 auf. Diesem Federprofil 15 gegenüber ist ein Nutprofil 16 vorgesehen. Bei dem dargestellten und insoweit bevorzugten Kofferaufbau 1 sind die Seitenwände 2,3 und die Stirnwand 4 aus Einzelmodulen aufgebaut, die gleichartig zu dem in der Fig. 2 dargestellten Einzelmodul 6 ausgebildet sind. Die einzelnen Einzelmodule unterscheiden sich dabei lediglich in der Breite, d.h. der Länge der Seitenkanten 10,11 des zweiten Paares von Seitenkanten.

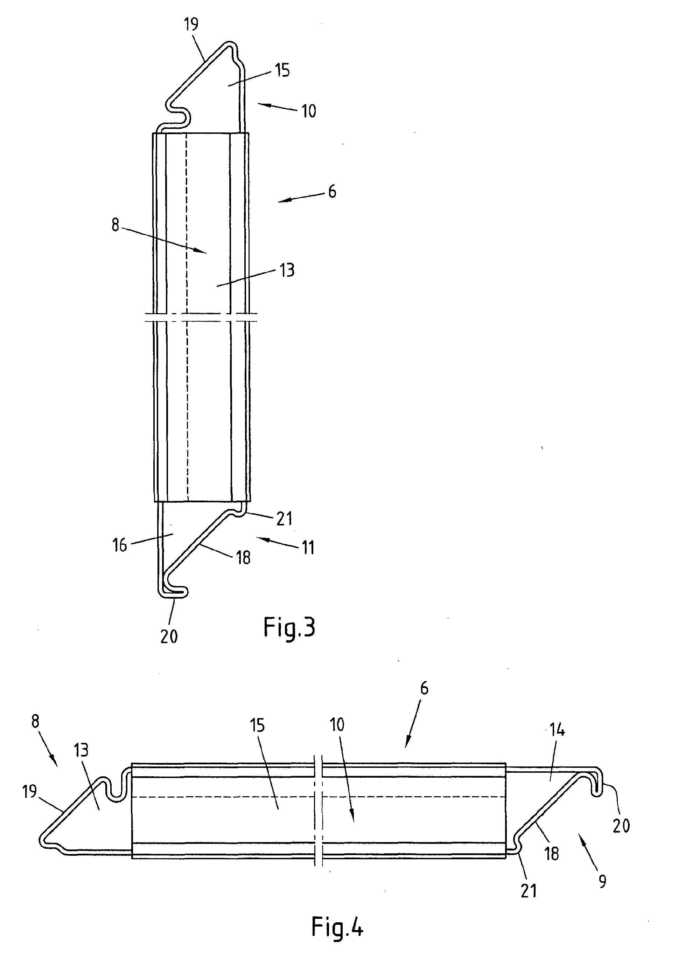

In der Fig. 3 ist das Einzelmodul 6 aus Fig. 2 in einer Seitenansicht von links dargestellt, wobei das Federprofil 15 und das Nutprofil 16 des zweiten Paars von Seitenkanten 10,11 im Profil dargestellt ist. Das Federprofil 13 des ersten Paars von Seitenkanten 8,9 ist in Draufsicht dargestellt. Diese Darstellung entspricht der Anordnung von Federprofil 15 und Nutprofil 16 des zweiten Paars von Schmalkanten 10,11 im verbauten Zustand.

In der Fig. 4 ist das Einzelmodul 6 aus einer Ansicht von oben bezogen auf die Darstellung der Fig. 2 dargestellt. Das Federprofil 13 und das Nutprofil 14 des ersten Paars von Schmalseiten 8,9 sind in gleicher Weise wie das Federprofil 15 und das Nutprofil 16 des zweiten Paars von Schmalseiten 10,11 ausgebildet.

Die Federprofile 13,15 und die Nutprofile 14,16 sind zudem korrespondierend zueinander ausgebildet, so dass Nutprofile 14,16 und Federprofile 13,15 gleichartiger Einzelmodule 6 miteinander verbunden werden können. Dazu weisen das Federprofil 13,15 und das Nutprofil 14,16 abgeschrägte Anlageflächen 18,19 auf, die beim dargestellten und insoweit bevorzugten Einzelmodul 6 gegenüber der Ebene des Einzelmoduls 6 um 45° geneigt sind. Am äußeren Ende des Nutprofils 14,16 ist ein hakenförmiger Abschnitt 20 ausgebildet. Diesen hintergreifend kann ein korrespondierendes Federprofil 13,15 in das Nutprofil 14,16 eingeführt werden. Damit das Federprofil 13,15 automatisch passgenau vom Nutprofil 14,16 aufgenommen wird, weist das Nutprofil 14,16 an dem anderen Ende der Anschlagfläche 18 eine Art Wulst 21 auf.

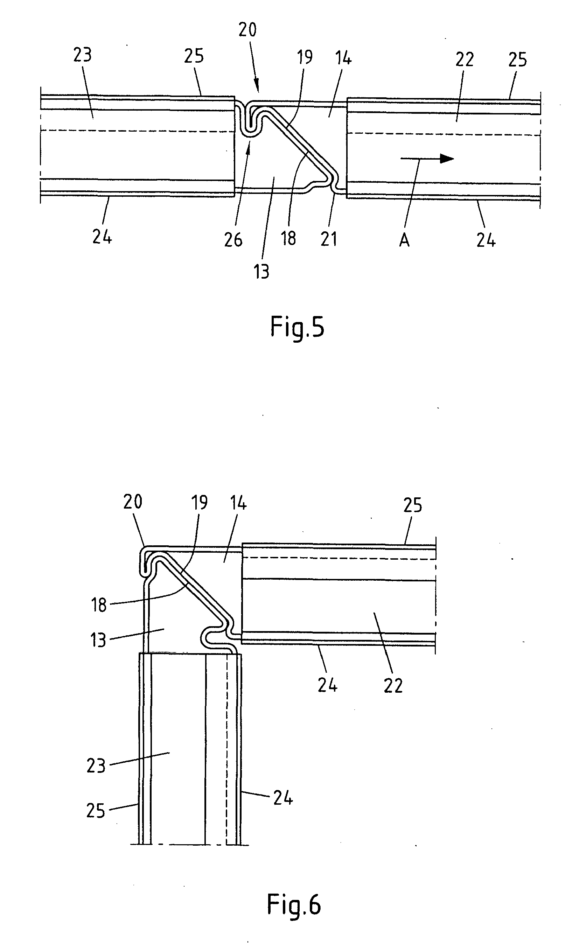

Ein Nutprofil 14,16 und ein Federprofil 13,15 können auf zwei unterschiedliche Weisen miteinander verbunden werden, wie dies in den Fig. 5 und 6 dargestellt ist. In der Fig. 5 ist eine Verbindung zwischen einem Nutprofil 14 und einem Federprofil 13 benachbarter Einzelmodule 22,23 dargestellt, wobei die beiden Einzelmodule 22,23 im verbundenen Zustand in einer geraden Line angeordnet sind. Die benachbarten Einzelmodule 22,23 sind mit anderen Worten parallel zueinander und in der gleichen Ebene angeordnet. Beim dargestellten und insoweit bevorzugten Ausführungsbeispiel sind zudem die inneren Decklagen 24 und die äußeren Decklagen 25 fluchtend zueinander ausgerichtet. Die Verbindung der Einzelmodule 22,23 in gerader Linie wird insbesondere zum Aufbau einer Komponente in Form einer Seitenwand, einer Stirnwand oder eines Dachs genutzt.

Die Anschlagflächen 18,19 des Nutprofils 14 und des Federprofils 13 liegen über einen Großteil der Verbindung aneinander an. Das Federprofil 13 ist dabei in dem Nutprofil 14 zwischen dem hakenförmigen äußeren Abschnitt 20 und dem Wulst 21 aufgenommen, der dem inneren Ende des Nutprofils 14 zugeordnet ist. Der hakenförmige Abschnitt 20 des Nutprofils 14 greift in eine korrespondierende Aussparung 26 des Federprofils 13 ein. Somit sind die verbundenen Einzelmodule 22,23 unter Ausbildung eines Formschlusses miteinander verriegelt. Diese Verriegelung ist wirksam in einer Auszugsrichtung A, senkrecht zur Verbindung und parallel zu den verbundenen Einzelmodulen 22,23. Aufgrund des Formschlusses werden das Nutprofil 14 und das Federprofil 13 schräg zueinander, insbesondere rechtwinklig zu den Einzelmodulen 22,23, und/oder durch eine Winkelbewegung verbunden. Zudem kann der Formschluss zwischen dem hakenförmigen Abschnitt 20 des Nutprofils 14 und der Nut 26 des Federprofils 13 zur Aufnahme drängender Kräfte genutzt werden.

In der Fig. 6 ist eine alternative Verbindung zwischen einem Federprofil 13 und einem Nutprofil 14 benachbarter Einzelmodule 22,23 vorgesehen. Gegenüber der in der Fig. 5 dargestellten Verbindung ist bei der in der Fig. 6 dargestellten Verbindung das das Federprofil 13 aufweisende Einzelmodul einerseits um 90° gekippt und andererseits um 180° gedreht. Die Ausrichtung des das Nutprofil 14 aufweisenden Einzelmoduls 22 ist dagegen unverändert. Die beiden Einzelmodule 22,23 sind gemäß Fig. 6 über Eck verbunden. Dabei bilden die beiden Einzelmodule 22,23 eine Kante des Kofferaufbaus aus. Folglich dient diese Verbindung zweier Einzelmodule insbesondere dem Verbinden zweier Komponenten des Kofferaufbaus miteinander, d.h. dem Verbinden eines Einzelmoduls des Dachs mit einem Einzelmodul einer Seitenwand oder der Stirnwand oder dem Verbinden eines Einzelmoduls der Stirnwand mit einem Einzelmodul einer Seitenwand.

Bei der Verbindung der Einzelmodule 22,23 über Eck greift das Federprofil 13 hinter den hakenförmigen Abschnitt 20 des Nutprofils 14, wobei die Anschlagfläche 19 des Federprofils 13 mit der Anschlagfläche 18 des Nutprofils 14 in Anlage kommt. Zur Positionierung des Federprofils 13 im Nutprofil 14 dient die Wulst 21 des Nutprofils 14. Aufgrund der Wulst 21 und des hakenförmigen Abschnitts 20 des Nutprofils 14 wird ein gegenseitiges Verschieben der Anschlagflächen 18,19 verhindert. In Richtung der Anschlagflächen 18,19 bilden das Federprofil 13 und das Nutprofil 14 einen Formschluss, und zwar unabhängig davon, ob die Einzelmodule 22,23 in gerader Linie oder über Eck miteinander verbunden sind. Bei der Verbindung über Eck umgreift das Nutprofil 14 das äußere Ende des Federprofils 13. Dies kann dazu genutzt werden, die drängenden Kräfte auf das das Federprofil 13 aufweisende Einzelmodul 23 aufzufangen.

Bei den in den Fig. 5 und 6 dargestellten Verbindungen erstrecken sich die äußeren Decklagen 25 der Einfachheit und der besseren Anschaulichkeit halber nicht über den Verbindungsbereich der Verbindungsprofile. Der Verbindungsbereich kann daher durch weitere Profile abgedeckt und/oder abgedichtet werden. Alternativ oder zusätzlich können sich die äußeren Decklagen 25 aber auch weiter nach außen erstrecken und bedarfsweise zusätzlich gegeneinander abgedichtet sein.

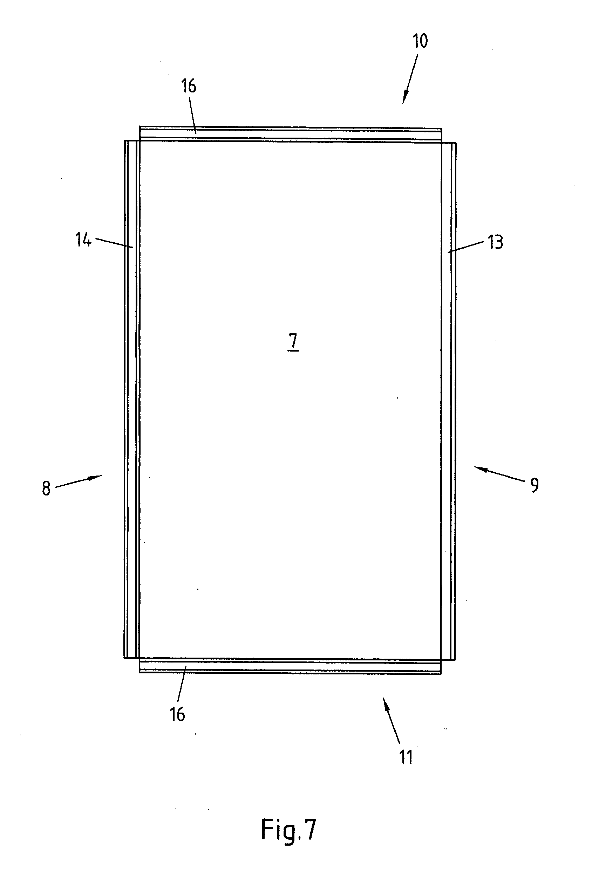

In der Fig. 7 ist ein weiteres Einzelmodul 7 des Kofferaufbaus 1 dargestellt, das Teil des Dachs 5 ist. Auch dieses Einzelmodul 7 weist ein erstes Paar längere Schmalseiten 8,9 und ein zweites Paar kürzerer Schmalseiten 10,11 auf. Das in der Fig. 7 dargestellte Einzelmodul 7 unterscheidet sich von dem in der Fig. 2 dargestellten Einzelmodul 6 im Wesentlichen darin, dass an beiden Schmalseiten des zweiten Paars von Schmalseiten 10,11 ein Nutprofil 16 vorgesehen ist. Am ersten Paar von Schmalseiten 8,9 sind einander gegenüber ein Nutprofil 14 und ein Federprofil 13 vorgesehen, jedoch gegenüber dem Einzelmodul 6 gemäß Fig. 2 an vertauschten Schmalseiten 8,9 des ersten Paars von Schmalseiten 8,9.

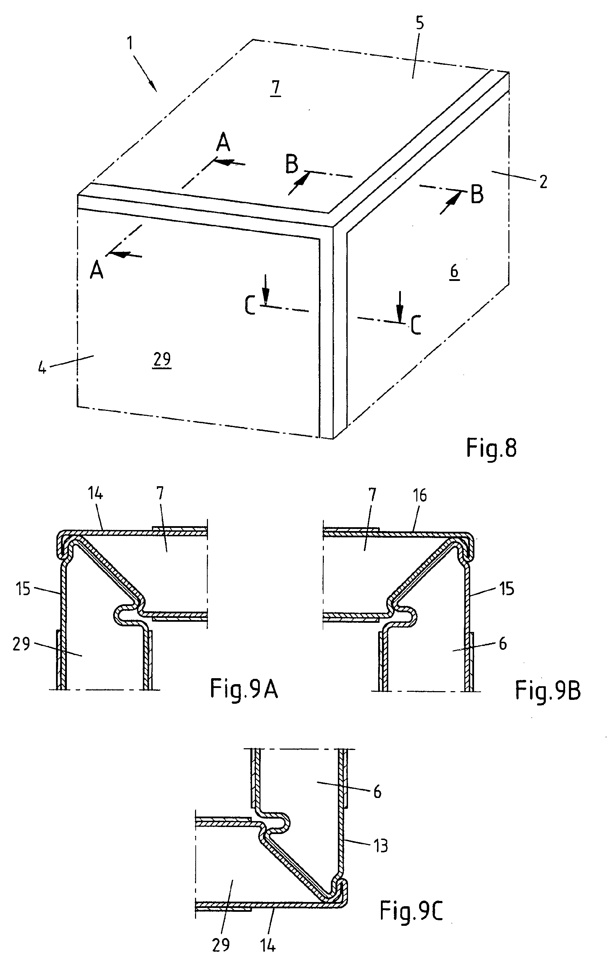

In der Fig. 8 ist eine vordere obere Eckverbindung 28 des Kofferaufbaus 1 im Detail dargestellt. Diese Eckverbindung 28 wird gebildet durch ein Einzelmodul 29 der Stirnwand 4, ein Einzelmodul 6 der Seitenwand 2 und ein Einzelmodul 7 des Dachs 5. In der Eckverbindung 28 treffen die Verbindungen des Einzelmoduls 7 des Dachs 5 mit dem Einzelmodul 6 der Seitenwand 2 sowie mit dem Einzelmodul 29 der Stirnwand 4 aufeinander. Jede dieser Verbindungen ist als Verbindung über Eck ausgestaltet, wie sie prinzipiell in der Fig. 6 dargestellt ist. Die Verbindungen im Einzelnen sind in der Fig. 9A bis 9C in einem Schnitt entlang der Ebenen A-A bis C-C dargestellt.

Der Kofferaufbau 1 ist so ausgestaltet, dass aufgrund der Anordnung von Federprofilen 13 und Nutprofilen 14,16 drängende Kräfte des Seitenwandpaneels 2 nach außen von dem Dachpaneel 5 und dem Stirnwandpaneel 4 aufgenommen werden, weil deren Nutprofile 14,16 außen um die Federplatte 13,15 herumgreifen. In gleicher Weise greift das Dachpaneel um das Federprofil des Stirnwandpaneels.

Nicht im Einzelnen dargestellt ist, dass das Nutprofil und das Federprofil einer Verbindung zur Stabilisierung der Verbindung verschraubt und/oder verklebt sein können. Vorzugsweise sind die Anschlagflächen miteinander verklebt und/oder verschraubt. Im Falle einer Verschraubung, kann in wenigstens dem Nutprofil oder dem Federprofil eine Öffnung vorgesehen sein, um eine entsprechende Schraube anziehen zu können.

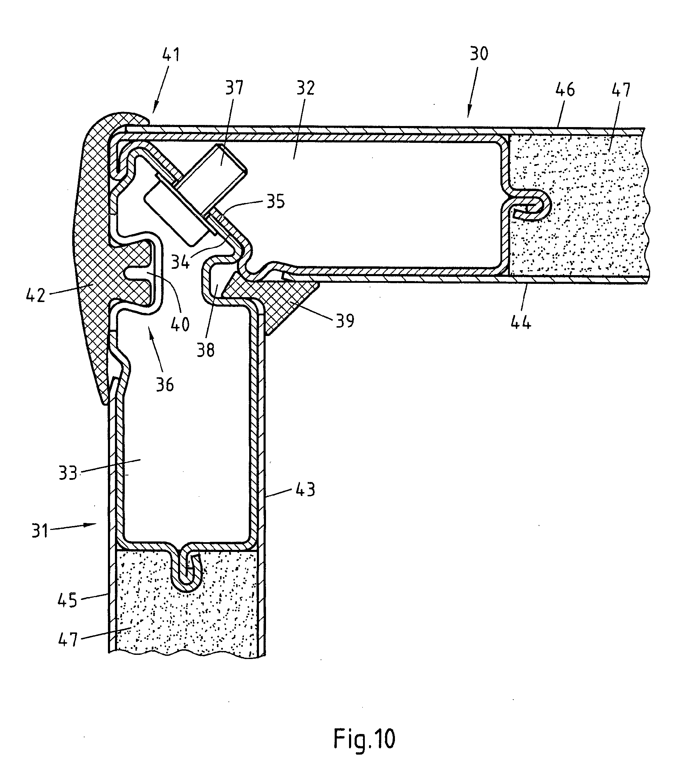

Eine besonders bevorzugte Verbindung über Eck zwischen zwei Einzelmodulen 30,31 ist in der Fig. 10 dargestellt. Bei dieser Verbindung sind das Nutprofil 32 und das Federprofil 33 miteinander verschraubt, und zwar im Bereich der Anschlagflächen 34,35. Dazu ist in das Federprofil 33 eine Öffnung 36 eingebracht, um die Schraubverbindung 37 anzuziehen. Zur Abdichtung des inneren Verbindungsbereichs zwischen dem Nutprofil 32 und dem Federprofil 33 ist in dem Federprofil 33 eine Aufnahme 38 vorgesehen, in die ein Dichtungselement 39, insbesondere in Form einer Gummilippe, eingebracht ist. Bei der dargestellten und insoweit bevorzugten Verbindung ist das Dichtungselement 39 zwischen dem Federprofil 33 und dem Nutprofil 32 eingeklemmt.

Auf der gegenüberliegenden Seite des Federprofils 33 ist in eine Nut 40, in welche bei einer Verbindung der Einzelmodule 30,31 in gerader Linie der hakenförmige Abschnitt 41 des Nutprofils 32 aufgenommen wird, ein weiteres Dichtungselement 42 vorgesehen, das gleichzeitig als Kantenschutz dient. Jedes der Dichtungselemente 39,42 erstreckt sich auf der entsprechenden Seite der Verbindung von einer Decklage 43,44 zur Decklage 45,46 des angrenzenden Einzelmoduls 30,31.

Das Federprofil 33 und das Nutprofil 32 sind aus Blech durch Rollen gefertigt. Zwischen den Verbindungsprofilen ist der Hohlraum zwischen den Decklagen 43,44,45,46 durch eine Kernlage 47 aus geschäumtem Kunststoff in Form von Polyurethan-Schaum ausgefüllt.

Weitere nicht dargestellte Ausgestaltungen der Verbindung bzw. Nut- und Federprofile sind denkbar.

## Patentansprüche

1. Einzelmodul (6,7,29,30,31) für die Bildung eines Kofferaufbaus (1) eines Nutzfahrzeugs (N), insbesondere Transporters, Lastkraftwagens, Anhängers und/oder Aufliegers, mit weiteren Einzelmodulen,
- wobei an einer Innenseite eine innere Decklage (24,43,44), an einer Außenseite eine äußere Decklage (25,45,46) und dazwischen eine Kernlage (47) vorgesehen sind,
- wobei ein Profilrahmen (12) an vier umlaufenden Schmalseiten (8,9,10,11) vorgesehen ist,
- wobei der Profilrahmen (12) an einem ersten Paar von einander gegenüberliegenden Schmalseiten (8,9) ein Federprofil (13) und ein Nutprofil (14) zur Verbindung mit gleichartigen Federprofilen (13) und Nutprofilen (14) weiterer Einzelmodule (6,7,29,30,31) aufweist,
- wobei an einem zweiten Paar von einander gegenüberliegenden Schmalseiten (10,11) ein Federprofil (15,33) oder ein Nutprofil (16,32) vorgesehen ist und
- wobei das Federprofil (15,33) oder das Nutprofil (16,32) des zweiten Paares von Schmalseiten (10,11) gleichartig zu dem Federprofil (13) oder dem Nutprofil (14) des ersten Paars von Schmalseiten (8,9) ausgebildet ist, **dadurch gekennzeichnet, dass**
- das wenigstens eine Nutprofil (14,16,32) und das wenigstens eine Federprofil (13,15,33) derart ausgebildet sind, so dass das Nutprofil (14,16,32) und das Federprofil (13,15,33) zweier gleichartiger Einzelmodule (6,7,29,30,31) in einer ersten gegenseitigen Ausrichtung des Nutprofils (14,16,32)und des Federprofils (13,15,33) in einer gemeinsamen Ebene und in einer zweiten gegenseitigen Ausrichtung des Nutprofils (14,16,32) und des Federprofils (13,15,33) senkrecht zueinander verbindbar sind, so dass das Einzelmodul (6,7,29,30,31) in der ersten gegenseitigen Ausrichtung des Nutprofils (14,16,32) und des Federprofils (13,15,33) in gerader Linie und in der zweiten gegenseitigen Ausrichtung des Nutprofils (14,16,32) und des Federprofils (13,15,33) auch über Eck mit einem gleichartigen Einzelmodul. (6,7,29,30,31) verbunden werden kann.

2. Einzelmodul nach Anspruch 1,
**dadurch gekennzeichnet, dass** an dem zweiten Paar Schmalseiten (10,11) zwei gleichartige Nutprofile (16) oder zwei gleichartige Federprofile (13,15,33) vorgesehen sind.

3. Einzelmodul nach Anspruch 1 oder 2,
**dadurch gekennzeichnet, dass** das wenigstens eine Nutprofil (14,16,32) und das wenigstens eine Federprofil (13,15,33) derart ausgebildet sind, dass das Einzelmodul (6,7,29,30,31) mit gleichartigen Einzelmodulen (6,7,29,30,31) in einer Auszugsrichtung senkrecht zum Nutprofil (14,16,32) und parallel zum Einzelmodul (6,7,29,30,31) des Nutprofils (14,16,32) verriegelt werden kann.

4. Einzelmodul nach einem der Ansprüche 1 bis 3,
**dadurch gekennzeichnet, dass** das wenigstens eine Nutprofil (14,16,32) und das wenigstens eine Federprofil (13,15,33) so ausgebildet sind, dass das Einzelmodul (6,7,29,30,31) mit einem weiteren gleichartigen Einzelmodul (6,7,29,30,31) in gerader Linie und/oder über Eck mittels einer Schnappverbindung verbunden werden kann.

5. Einzelmodul nach einem der Ansprüche 1 bis 4,
**dadurch gekennzeichnet, dass** das wenigstens eine Nutprofil (14,16,32) einen hakenförmigen Abschnitt (20,41) aufweist und dass das Federprofil (13,15,33) eine Nut (26,40) zur Aufnahme des hakenförmigen Abschnitts (20,41) eines Nutprofils (14,16,32) eines gleichartigen Einzelmoduls (6,7,29,30,31) bei Verbindung beider Einzelmodule (6,7,29,30,31) in gerader Linie aufweist.

6. Einzelmodul nach einem der Ansprüche 1 bis 5,
**dadurch gekennzeichnet, dass** die äußere Decklage um den hakenförmigen Abschnitt des wenigstens einen Nutprofils herumgeführt ist und dass die äußere Decklage zur Aufnahme in der Nut eines Federprofils eines gleichartigen Einzelmoduls bei Verbindung beider Einzelmodule in gerader Linie vorgesehen ist.

7. Einzelmodul nach einem der Ansprüche 1 bis 6,
**dadurch gekennzeichnet, dass** das wenigstens eine Federprofil (13,15,33) und/oder das wenigstens eine Nutprofil (14,16,32) als Rollprofil ausgebildet sind.

8. Kofferaufbau (1) eines Nutzfahrzeugs (N), insbesondere Lastkraftwagens, Anhängers und/oder Aufliegers, umfassend wenigstens drei Einzelmodule nach einem der Ansprüche 1 bis 7,
- wobei ein erstes Einzelmodul (6) mit einem zweiten Einzelmodul über ein Federprofil (13) und ein Nutprofil (14) der entsprechenden Einzelmodule (6) in parallelen Ebenen, vorzugsweise fluchtend, miteinander verbunden sind und
- wobei das erste Einzelmodul (6) mit einem dritten Einzelmodul (29) über ein Federprofil (13) und ein Nutprofil (14) der entsprechenden Einzelmodule (6,29) über Eck, vorzugsweise im rechten Winkel, miteinander verbunden sind.

9. Kofferaufbau nach Anspruch 8,
**dadurch gekennzeichnet, dass**
- das erste Einzelmodul (6) und das zweite Einzelmodul Teil einer Seitenwand (2) sind,
- dass das dritte Einzelmodul (29) Teil einer Stirnwand (4) ist und
- dass das erste, das zweite und das dritte Einzelmodul (6,29) jeweils an dem vertikalen Paar Schmalkanten (8,9) ein Federprofil (13) und ein Nutprofil (14) aufweisen.

10. Kofferaufbau nach Anspruch 8 oder 9,
**dadurch gekennzeichnet, dass** ein viertes Einzelmodul (7) nach einem der Ansprüche 1 bis 8 vorgesehen ist und dass das erste Einzelmodul (6) und das dritte Einzelmodul (29) jeweils mit dem vierten Einzelmodul (7) über ein Federprofil (15) und ein Nutprofil (14,16) der entsprechenden Einzelmodule (6,7,29) über Eck, vorzugsweise im rechten Winkel, verbunden sind.

11. Kofferaufbau nach einem der Ansprüche 8 bis 10,
**dadurch gekennzeichnet, dass** das erste Einzelmodul (6) und das dritte Einzelmodul (29) an der oberen horizontalen Schmalseite (10) ein Federprofil (15) aufweisen.

12. Kofferaufbau nach einem der Ansprüche 8 bis 11,
**dadurch gekennzeichnet, dass** das vierte Einzelmodul (7) an drei Schmalseiten (8,10,11) ein Nutprofil (14,16) aufweist.

13. Kofferaufbau nach Anspruch 8 oder 9,
**dadurch gekennzeichnet, dass**
- das erste Einzelmodul (6) und das zweite Einzelmodul Teil einer Seitenwand (2) sind,
- dass das dritte Einzelmodul (7) Teil eines Dachs (5) ist und
- dass das erste und das zweite Einzelmodul (6) jeweils an dem vertikalen Paar Schmalkanten (8,9) ein Federprofil (13) und ein Nutprofil (15) sowie jeweils an der oberen horizontalen Schmalkante (10) ein Federprofil (15) aufweisen.

## Claims

1. Individual module (6, 7, 29, 30, 31) for forming a box body (1) of a commercial vehicle (N), in particular of a transporter, a truck, a trailer and/or a semi-trailer, with further individual modules,
- wherein an inner top layer (24, 43, 44) is provided on an inner side, an outer top layer (25, 45, 46) is provided on an outer side and a core layer (47) is provided therebetween,
- wherein a profile frame (12) is provided on four peripheral narrow sides (8, 9, 10, 11),
- wherein the profile frame (12) has on a first pair of narrow sides (8, 9) located opposite one another a tongue profile (13) and a groove profile (14) for connecting to similar tongue profiles (13) and groove profiles (14) of further individual modules (6, 7, 29, 30, 31),
- wherein a tongue profile (15, 33) or a groove profile (16, 32) is provided on a second pair of narrow sides (10, 11) located opposite one another, and
- wherein the tongue profile (15, 33) or the groove profile (16, 32) of the second pair of narrow sides (10, 11) is designed in a manner similar to the tongue profile (13) or the groove profile (14) of the first pair of narrow sides (8, 9),
**characterized in that**
- the at least one groove profile (14, 16, 32) and the at least one tongue profile (13, 15, 33) are designed in such a way that the groove profile (14, 16, 32) and the tongue profile (13, 15, 33) of two similar individual modules (6, 7, 29, 30, 31) can be connected in a common plane in a first mutual orientation of the groove profile (14, 16, 32) and of the tongue profile (13, 15, 33) and can be connected to one another in a second mutual orientation of the groove profile (14, 16, 32) and of the tongue profile (13, 15, 33) perpendicular, so that the individual module (6, 7, 29, 30, 31) can be connected to a similar individual module (6, 7, 29, 30, 31) in a straight line in the first mutual orientation of the groove profile (14, 16, 32) and of the tongue profile (13, 15, 33) and can also be connected thereto via a corner in the second mutual orientation of the groove profile (14, 16, 32) and of the tongue profile (13, 15, 33).

2. Individual module according to claim 1, **characterized in that** two similar groove profiles (16) or two similar tongue profiles (13, 15, 33) are provided on the second pair of narrow sides (10, 11).

3. Individual module according to claim 1 or 2, **characterized in that** the at least one groove profile (14, 16, 32) and the at least one tongue profile (13, 15, 33) are designed in such a way that the individual module (6, 7, 29, 30, 31) can be locked to similar individual modules (6, 7, 29, 30, 31) in a pull-out direction perpendicular to the groove profile (14, 16, 32) and parallel to the individual module (6, 7, 29, 30, 31) of the groove profile (14, 16, 32).

4. Individual module according to any of claims 1 to 3, **characterized in that** the at least one groove profile (14, 16, 32) and the at least one tongue profile (13, 15, 33) are designed in such a way that the individual module (6, 7, 29, 30, 31) can be connected to a further similar individual module (6, 7, 29, 30, 31) in a straight line and/or via a corner by means of a snap-in connection.

5. Individual module according to any of claims 1 to 4, **characterized in that** the at least one groove profile (14, 16, 32) has a hook-shaped section (20, 41), and **in that** the tongue profile (13, 15, 33) has a groove (26, 40) for receiving the hook-shaped section (20, 41) of a groove profile (14, 16, 32) of a similar individual module (6, 7, 29, 30, 31) when the two individual modules (6, 7, 29, 30, 31) are connected in a straight line.

6. Individual module according to any of claims 1 to 5, **characterized in that** the outer top layer is guided around the hook-shaped section of the at least one groove profile, and **in that** the outer top layer is provided for being received in the groove of a tongue profile of a similar individual module when the two individual modules are connected in a straight line.

7. Individual module according to any of claims 1 to 6, **characterized in that** the at least one tongue profile (13, 15, 33) and/or the at least one groove profile (14, 16, 32) are designed as a rolled profile.

8. Box body (1) of a commercial vehicle (N), in particular of a transporter, a truck, a trailer and/or a semi-trailer, comprising at least three individual modules according to any of claims 1 to 7,
- wherein a first individual module (6) and a second individual module are connected to one another in parallel planes, preferably in a flush manner, via a tongue profile (13) and a groove profile (14) of the individual modules (6) in question, and
- wherein the first individual module (6) and a third individual module (29) are connected to one another via a corner, preferably at a right angle, via a tongue profile (13) and a groove profile (14) of the individual modules (6, 29) in question.

9. Box body according to claim 8, **characterized in that**
- the first individual module (6) and the second individual module are part of a side wall (2),
- **in that** the third individual module (29) is part of a front wall (4), and
- **in that** the first, the second and the third individual module (6, 29) each have a tongue profile (13) and a groove profile (14) on the vertical pair of narrow edges (8,9).

10. Box body according to claim 8 or 9, **characterized in that** a fourth individual module (7) according to any of claims 1 to 8 is provided, and **in that** the first individual module (6) and the third individual module (29) are each connected to the fourth individual module (7) via a corner, preferably at a right angle, via a tongue profile (15) and a groove profile (14, 16) of the individual modules (6, 7, 29) in question.

11. Box body according to any of claims 8 to 10, **characterized in that** the first individual module (6) and the third individual module (29) have a tongue profile (15) on the upper horizontal narrow side (10).

12. Box body according to any of claims 8 to 11, **characterized in that** the fourth individual module (7) has a groove profile (14, 16) on three narrow sides (8, 10, 11).

13. Box body according to claim 8 or 9, **characterized in that**
- the first individual module (6) and the second individual module are part of a side wall (2),
- **in that** the third individual module (7) is part of a roof (5), and
- **in that** the first and the second individual module (6) each have a tongue profile (13) and a groove profile (15) on the vertical pair of narrow edges (8, 9) and each have a tongue profile (15) on the upper horizontal narrow edge (10).

## Revendications

1. Module individuel (6, 7, 29, 30, 31) destiné à former une caisse de fourgon (1) d'un véhicule utilitaire (N), en particulier d'un fourgon de livraison, d'un camion, d'une remorque et/ou d'une semi-remorque avec d'autres modules individuels, - pour lequel sont prévues une couche de couverture intérieure (24, 43, 44) sur un côté intérieur, une couche de couverture extérieure sur un côté extérieur (25, 45, 46) et une couche centrale (47) entre celles-ci
- pour lequel un châssis en profilés (12) est prévu sur quatre chants (8, 9, 10, 11) périphériques,
- pour lequel le châssis en profilés (12) comporte sur une première paire de chants (8, 9) opposés l'un à l'autre, un profilé flexible (13) et un profilé rainuré (14) pour raccord avec des profilés flexibles (13) et profilés rainurés (14) identiques d'autres modules individuels (6, 7, 29, 30, 31),
- pour lequel un profilé flexible (15, 33) ou un profilé rainuré (16, 32) est prévu sur une deuxième paire de chants (10, 11) opposés l'un à l'autre et
- pour lequel le profilé flexible (15, 33) ou le profilé rainuré (14) de la deuxième paire de chants (10, 11) est constitué de la même façon que le profilé flexible (13) ou le profilé rainuré (14) de la première paire de chants (8, 9),
**caractérisé en ce que**
- le au moins un profilé rainuré (14,16, 32) et le au moins un profilé flexible (13, 15, 33) sont constitués de telle sorte que le profilé rainuré (14, 16, 32) et le profilé flexible (13, 15, 33) de deux modules individuels identiques (6, 7, 29, 30, 31) peuvent être raccordés perpendiculairement l'un à l'autre dans un plan commun et dans une deuxième orientation réciproque du profilé rainuré (14, 16, 32) et du profilé flexible (13, 15, 33) de sorte que le module individuel (6, 7, 29, 30, 31) peut être également raccordé avec un module individuel (6, 7, 29, 30, 31) identique dans la première orientation réciproque du profilé rainuré (14, 16, 32) et du profilé flexible (13, 15, 33) en ligne droite et également en diagonale dans une deuxième orientation réciproque du profilé rainuré (14, 16, 32) et du profilé flexible (13, 15, 33).

2. Module individuel selon la revendication 1 **caractérisé en ce que** deux profilés rainurés (16) identiques ou deux profilés flexibles identiques (13, 15, 33) sont prévus sur la deuxième paire de chants (10, 11).

3. Module individuel selon la revendication 1 ou 2 **caractérisé en ce que** le au moins un profilé rainuré (14,16, 32) et le au moins un profilé flexible (13, 15, 33) sont constitués de telle sorte que le module individuel (6, 7, 29, 30, 31) peut être verrouillé avec des modules individuels (6, 7, 29, 30, 31) identiques dans une direction d'extension perpendiculairement au profilé rainuré (14, 16, 32) et parallèlement au module individuel (6, 7, 29, 31) du profilé rainuré (14, 16, 32).

4. Module individuel selon l'une quelconque des revendications 1 à 3 **caractérisé en ce que** le au moins un profilé rainure (14, 16, 32) et le au moins un profilé flexible (13, 15; 33) sont constitués de telle sorte que le module individuel (6, 7, 29, 30, 31) peut être raccordé avec un autre module individuel (6, 7, 29, 30, 31) identique en ligne droite et/ou en diagonale au moyen d'un assemblage à encliquetage.

5. Module individuel selon l'une quelconque des revendications 1 à 4 **caractérisé en ce que** le au moins un profilé rainuré (14, 16; 32) comporte une section en forme de crochet (20, 41) et **en ce que** le profilé flexible (13, 15, 33) comporte une rainure (26, 40) pour recevoir la section en forme de crochet (20, 41) d'un profilé rainuré (14, 16, 32) d'un module individuel (6, 7, 29, 30, 31) identique lors de l'assemblage des deux modules individuels (6, 7, 29, 30, 31) en ligne droite.

6. Module individuel selon l'une quelconque des revendications 1 à 5 **caractérisé en ce que** la couche de couverture extérieure contourne la section en forme de crochet du au moins un profilé rainuré et **en ce que** la couche de couverture extérieure est prévue en ligne droite pour réception dans la rainure d'un profilé flexible d'un module individuel identique lors de l'assemblage des deux modules individuels.

7. Module individuel selon l'une quelconque des revendications 1 à 6 **caractérisé en ce que** le au moins un profilé flexible (13, 15, 33) et/ou le au moins un profilé rainuré (14, 16, 32) sont constitués comme un profilé de roulement.

8. Caisse de fourgon (1) d'un véhicule utilitaire (N), en particulier de camion, de remorque et/ou semi-remorque, comprenant au moins trois modules individuels selon l'une des revendications 1 à 7,
- pour laquelle, un premier module individuel (6) et un deuxième module individuel sont raccordés entre eux par un profilé flexible (13) et un profilé rainuré (14) des modules individuels (6) correspondants dans des plans parallèles, de préférence en alignement et,
- pour laquelle, le premier module individuel (6) et un troisième module individuel (29) sont raccordés entre eux en diagonale, de préférence à angle droit, par un profilé flexible (13) et un profilé rainuré (14) des modules individuels (6, 29) correspondants.

9. Caisse de fourgon selon la revendication 8 **caractérisée en ce que**
- le premier module individuel (6) et le deuxième module individuel font partie d'une paroi latérale (2),
- **en ce que** le troisième module individuel (29) fait partie d'une paroi avant (4), et
- **en ce que** les premier, deuxième et troisième modules individuels (6, 29) comportent respectivement sur la paire verticale des chants (8, 9) un profilé flexible (13) et un profilé rainuré (14).

10. Caisse de fourgon selon la revendication 8 ou 9 **caractérisée en ce qu'**un quatrième module individuel (7) est prévu selon l'une des revendications 1 à 8 et **en ce que** le premier module individuel (6) et le troisième module individuel (29) sont respectivement raccordés entre eux en diagonale, de préférence à angle droit, avec le quatrième module individuel (7) par un profilé flexible (15) et un profilé rainuré (14, 16) des modules individuels correspondants (6, 7, 29).

11. Caisse de fourgon selon l'une quelconque des revendications 8 à 10 **caractérisée en ce que** le premier module individuel (6) et le troisième module individuel (29) comportent un profilé flexible (15) sur le chant horizontale supérieur (10).

12. Caisse de fourgon selon l'une quelconque des revendications 8 à 11 **caractérisée en ce que** le quatrième module individuel (7) comporte un profilé rainuré (14, 16) sur trois chants (8, 10, 11).

13. Caisse de fourgon selon la revendication 8 ou 9 **caractérisée en ce que**
- le premier module individuel (6) et le deuxième module individuel font partie d'une paroi latérale (2),
- **en ce que** le troisième module individuel (7) est une partie d'un toit (5), et
- **en ce que** le premier et le deuxième module individuel (6) comportent respectivement sur la paire verticale de chants (8, 9) un profilé flexible (13) et un profilé rainuré (15) ainsi que respectivement un profilé flexible (15) sur les chants (10) horizontaux supérieurs.
